# EUROPÄISCHE PATENTANMELDUNG

(11) **EP 1 914 433 A2**
(43) Veröffentlichungstag der Anmeldung: **23.04.2008**
(21) Anmeldenummer: 07019675.3
(22) Anmeldetag: 09.10.2007
(51) Int. Cl.: F16D 13/64

(54) **Drehmomentübertragungsbaugruppe, insbesondere für einen Antriebsstrang eines Fahrzeugs**

(30) Priorität: 21.10.2006 DE 102006049775
(71) Anmelder: ZF Friedrichshafen AG, 88038 Friedrichshafen (DE)
(72) Erfinder: Weth, Jürgen, 97464 Niederwerrn (DE); Kühner, Michael, 97523 Schwanfeld (DE)

(57) **Zusammenfassung**

Eine Drehmomentübertragungsbaugruppe, insbesondere für den Antriebsstrang eines Fahrzeugs, umfasst eine erste Drehmomentübertragungseinheit (24), die zur Drehmomentübertragung in einem ersten Kopplungsbereich (44) zwischen zwei scheibenartigen und aufeinander zu bewegbaren Klemmelementen (20, 22) klemmbar ist und in einem zweiten Kopplungsbereich (50) eine erste Verzahnungsformation (46) aufweist, eine zweite Drehmomentübertragungseinheit (28), die in einem dritten Kopplungsbereich (54) eine zweite Verzahnungsformation (52) aufweist, welche mit der ersten Verzahnungsformation (46) der ersten Drehmomentübertragungseinheit (24) in Kämmeingriff steht, wobei ein die erste Verzahnungsformation (46) aufweisendes Drehmomentübertragungselement (38) der ersten Drehmomentübertragungseinheit (24) mit schirmartiger Konfiguration und elastisch verformbar ausgebildet ist, derart, dass bei zur Drehmomentübertragung geklemmtem ersten Kopplungsbereich (44) das Drehmomentübertragungselement (38) eine im Wesentlichen planare, nicht geschirmte oder geringer geschirmte Konfiguration aufweist, und wobei die erste Verzahnungsformation (46) und die zweite Verzahnungsformation (52) derart aufeinander abgestimmt sind, dass bei dem nicht geklemmten Zustand entsprechender schirmartiger Konfiguration des Drehmomentübertragungselements (38) ein Verzahnungsspiel (62) zwischen der ersten Verzahnungsformation (46) und der zweiten Verzahnungsformation (52) vorhanden ist, und dass bei dem geklemmten Zustand entsprechender planarer oder geringer geschirmter Konfiguration im Wesentlichen kein Verzahnungsspiel zwischen diesen vorhanden ist.

## Beschreibung

Die vorliegende Erfindung betrifft eine Drehmomentübertragungsbaugruppe, insbesondere für den Antriebsstrang eines Fahrzeugs, umfassend eine erste Drehmomentübertragungseinheit, die zur Drehmomentübertragung in einem ersten Kopplungsbereich zwischen zwei scheibenartigen und aufeinander zu bewegbaren Klemmelementen klemmbar ist und in einem zweiten Kopplungsbereich eine erste Verzahnungsformation aufweist, sowie eine zweite Drehmomentübertragungseinheit, die in einem dritten Kopplungsbereich eine zweite Verzahnungsformation aufweist, welche mit der ersten Verzahnungsformation der ersten Drehmomentübertragungseinheit in Kämmeingriff steht.

In verschiedenen Systembereichen in Fahrzeugen wird ein zwischen verschiedenen Baugruppen zu übertragendes Drehmoment über wahlweise zur Drehmomentübertragung einrückbare oder zur Drehmomentenentkopplung ausrückbare Kupplungen oder dergleichen übertragen. Beispielsweise sind derartige auch als Impulsstartkupplungen bekannte Reibungskupplungen in Hybridantrieben zwischen der Rotoranordnung einer Elektromaschine und der Kurbelwelle einer Brennkraftmaschine geschaltet, um eine Drehmomentübertragungsverbindung zwischen diesen beiden Baugruppen herstellen zu können. Insbesondere wird auf diese Art und Weise auch eine Drehmomentübertragung zwischen der Antriebswelle der Brennkraftmaschine, also der Kurbelwelle, und dem verbleibenden Teil des Antriebsstrangs realisiert.

Eine Anforderung an derartige Kupplungsanordnungen ist, dass sie zumindest geringfügige Radialversätze der Drehwellen der miteinander zu koppelnden Baugruppen und auch Achsneigungen, die zu Taumelbewegungen führen, kompensieren können. Hierzu ist es beispielsweise bekannt, eine als "Kupplungsscheibe" wirksame Drehmomentübertragungsbaugruppe einer derartigen Kupplung so auszugestalten, dass zwischen zwei Drehmomentübertragungseinheiten derselben eine mit Spiel behaftete Verzahnungsverbindung geschaffen ist. Diese ermöglicht sowohl geringfügige Radialrelativbewegungen als auch Axialrelativbewegungen, um beispielsweise durch eine Wärmeausdehnung, eine Kurbelwellenbewegung oder einen Verschleiß von Reibbelägen induzierte Axialbewegungen auch kompensieren bzw. aufnehmen zu können.

Derartige spielbehaftete Verzahnungseingriffe führen vor allem dann, wenn eine Brennkraftmaschine das Antriebsdrehmoment liefert, auf Grund der zwangsweise vorhandenen Drehmomentungleichförmigkeiten durch einen ständigen Anlagewechsel der Verzahnungsflanken zu Klappergeräuschen. Ferner hat dieser permanente Anlagewechsel einen vergleichsweise starken Verschleiß der miteinander in Eingriff stehenden Verzahnungen zur Folge, der wiederum Fehlrelativpositionierungen und somit auch mangelnde Kompensationsmöglichkeiten für Taumelbewegungen bzw. Radialversätze zur Folge haben kann.

Es ist die Aufgabe der vorliegenden Erfindung, eine Drehmomentübertragungsbaugruppe bereitzustellen, welche bei der Möglichkeit, Drehachsfehljustierungen zu kompensieren, das Problem eines übermäßigen Verschleißes und ungewünschter Geräusche im Drehmomentübertragungszustand beseitigt.

Erfindungsgemäß wird diese Aufgabe gelöst durch eine Drehmomentübertragungsbaugruppe, insbesondere für den Antriebsstrang eines Fahrzeugs, umfassend eine erste Drehmomentübertragungseinheit, die zur Drehmomentübertragung in einem ersten Kopplungsbereich zwischen zwei scheibenartigen und aufeinander zu bewegbaren Klemmelementen klemmbar ist und in einem zweiten Kopplungsbereich eine erste Verzahnungsformation aufweist, eine zweite Drehmomentübertragungseinheit, die in einem dritten Kopplungsbereich eine zweite Verzahnungsformation aufweist, welche mit der ersten Verzahnungsformation der ersten Drehmomentübertragungseinheit in Kämmeingriff steht, wobei ein die erste Verzahnungsformation aufweisendes Drehmomentübertragungselement der ersten Drehmomentübertragungseinheit mit schirmartiger Konfiguration und elastisch verformbar ausgebildet ist, derart, dass bei zur Drehmomentübertragung geklemmtem ersten Kopplungsbereich das Drehmomentübertragungselement eine im Wesentlichen planare, nicht geschirmte oder geringer geschirmte Konfiguration aufweist, und wobei die erste Verzahnungsformation und die zweite Verzahnungsformation derart aufeinander abgestimmt sind, dass bei dem nicht geklemmten Zustand entsprechender schirmartiger Konfiguration des Drehmomentübertragungselements ein Verzahnungsspiel zwischen der ersten Verzahnungsformation und der zweiten Verzahnungsformation vorhanden ist, und dass bei dem geklemmten Zustand entsprechender planarer oder geringer geschirmter Konfiguration im Wesentlichen kein Verzahnungsspiel zwischen diesen vorhanden ist.

Die erfindungsgemäße Drehmomentübertragungsbaugruppe ist also abhängig davon, ob über diese ein Drehmoment übertragen werden soll oder nicht, in verschiedenen Verformungszuständen. Bei nicht gewünschter Drehmomentübertragung ist die Drehmomentübertragungseinheit in einem im Wesentlichen entspannten Zustand mit schirmartiger Konfiguration, in welchem zwischen den beiden Verzahnungsformationen Verzahnungsspiel vorhanden ist. Soll ein Drehmoment übertragen werden, so wird die erste Drehmomentübertragungseinheit zunehmend aus ihrer schirmartigen Konfiguration heraus verformt bzw. gespannt, mit der Folge, dass auf Grund der Abflachung derselben in eine beispielsweise planare Gestalt eine Radialverlagerung der daran vorgesehenen ersten Verzahnungsformation auftreten wird. Diese wird somit in intensiveren Kontakt mit der zweiten Verzahnungsformation gedrängt, wobei das im entspannten Zustand vorhandene Verzahnungsspiel beseitigt wird und ein für die Drehmomentübertragung spielfreier und somit auch der Gefahr eines übermäßigen Verschleißes entzogener Kämmeingriff generiert ist.

Die erste Verzahnungsformation kann beispielsweise eine Innenverzahnung sein und kann mit nach radial innen konvergierenden Zähnen ausgebildet sein. Bei Abflachung der ersten Drehmomentübertragungseinheit bzw. eines Drehmomentübertragungselements derselben können sich derart nach innen konvergierende Zähne dann keilartig in die Zahnzwischenräume der zweiten Verzahnungsformation einschieben.

Um eine symmetrische und der Gefahr einer Unwucht nicht ausgesetzte Ausgestaltung zu erhalten, wird vorgeschlagen, dass das Drehmomentübertragungselement kreisringartig ausgebildet ist.

Die erforderliche elastische Verformbarkeit des Drehmomentübertragungselements kann beispielsweise dadurch bereitgestellt werden, dass dieses aus Blechmaterial aufgebaut ist.

Das Drehmomentübertragungselement kann eine Mehrzahl von Drehmomentübertragungselemententeilen aufweisen, die zusammen dann den zweiten Kopplungsbereich bilden. Über jedes dieser Drehmomentübertragungselemententeile wird somit ein Teil des zu übertragenden Drehmoments geleitet.

Dabei können wenigstens zwei der Drehmomentübertragungselemententeile in der gleichen Richtung geschirmt sein. Alternativ oder zusätzlich ist es möglich, dass wenigstens zwei Drehmomentübertragungselemententeile in entgegengesetzter Richtung geschirmt sind. Bei dieser Ausgestaltung werden also die Drehmomentübertragungselemententeile mit entgegengesetzt gerichteter Schirmung beim Übergang in einen Drehmomentübertragungszustand auch in entgegengesetzter Richtung, d. h. aufeinander zu, abgeflacht und beispielsweise in eine planare Konfiguration überführt, in welcher sie dann auch aneinander anliegen können.

Um bei derartiger Ausgestaltung von Anbeginn eines Drehmomentübertragungszustands eine möglichst flächige Reibwechselwirkung zwischen der ersten Drehmomentübertragungseinheit und den diese einklemmenden Klemmelementen erzielen zu können, wird vorgeschlagen, dass die Drehmomentübertragungselemententeile jeweils einen ersten ringscheibenartigen Abschnitt aufweisen, wobei die ersten ringscheibenartigen Abschnitte den zweiten Kopplungsbereich bereitstellen, und jeweils einen mit einem ersten ringscheibenartigen Abschnitt fest verbundenen, im Wesentlichen nicht geschirmten zweiten ringscheibenartigen Abschnitt aufweisen, wobei die zweiten ringscheibenartigen Abschnitte den ersten Kopplungsbereich bereitstellen. Auf diese Art und Weise kann eine ansonsten durch die Schrägstellung der ersten Drehmomentübertragungseinheit in ihrem ersten Kopplungsbereich generierte kantenartige Belastung derselben und der Klemmelemente vermieden werden.

Bei einer alternativen Ausgestaltungsform kann vorgesehen sein, dass wenigstens ein Drehmomentübertragungselemententeil in einem den ersten Kopplungsbereich bereitstellenden Bereich gekrümmt ausgebildet ist.

Um eine definierte und das erforderliche Drehmoment übertragende Reibwechselwirkung generieren zu können, wird vorgeschlagen, dass die erste Drehmomentübertragungseinheit in ihrem ersten Kopplungsbereich Reibbeläge aufweist. Die zweite Drehmomentübertragungseinheit kann eine Torsionsschwingungsdämpferanordnung umfassen.

Um den Effekt der Beseitigung des Verzahnungsspiels möglichst effizient gestalten zu können, wird vorgeschlagen, dass der erste Kopplungsbereich der ersten Drehmomentübertragungseinheit und der zweite Kopplungsbereich der ersten Drehmomentübertragungseinheit näherungsweise die gleiche Radialerstreckungslänge aufweisen. Alternativ kann hierzu auch vorgesehen sein, dass der erste Kopplungsbereich der ersten Drehmomentübertragungseinheit und der zweite Kopplungsbereich der ersten Drehmomentübertragungseinheit bezüglich einander versetzt liegen. Durch den Versatz wird entsprechend der Größe des Versatzes eine Übersetzung generiert. Hierzu kann beispielsweise vorgesehen sein, dass der erste Kopplungsbereich und der zweite Kopplungsbereich durch einen zu diesen beiden Kopplungsbereichen näherungsweise senkrecht stehenden Verbindungsbereich miteinander verbunden sind.

Die vorliegende Erfindung betrifft ferner eine Kupplungsanordnung, umfassend eine erfindungsgemäß aufgebaute Drehmomentübertragungsbaugruppe und beidseits des ersten Kopplungsbereichs derselben jeweils eine Klemmscheibe, wobei zum Herstellen eines Drehmomentübertragungszustands die Klemmscheiben in Richtung aufeinander zu pressbar sind.

Wie bereits ausgeführt, kann eine derartige Kupplungsanordnung beispielsweise in Hybridantriebssystemen als so genannte Impulsstartkupplung eingesetzt werden. Selbstverständlich ist auch der Einsatz als Anfahrkupplung in derartigen Hybridantriebssystemen bzw. auch konventionellen Antriebssystemen denkbar. Grundsätzlich kann eine derartige Kupplungsanordnung bzw. die dafür vorgesehene Drehmomentübertragungsbaugruppe überall dort Anwendung finden, wo beispielsweise im Bereich von Antriebssträngen die Möglichkeit eines Ausgleichs eines Radialversatzes bzw. einer Achsneigung geschaffen werden soll. Auch nasslaufende Doppelkupplungen, Mehrscheibenkupplungen oder dergleichen können gemäß den Prinzipien der vorliegenden Erfindung aufgebaut sein.

Die vorliegende Erfindung wird nachfolgend mit Bezug auf die beiliegenden Zeichnungen detailliert beschrieben. Es zeigt:
- Fig. 1: eine Teilschnittansicht eines Antriebssystems mit einer Kupplungsanordnung;
- Fig. 2: eine vergrößerte Darstellung des im Kreis II in Fig. 1 erkennbaren Details;
- Fig. 3: eine Teilschnittansicht zweier in Kämmeingriff miteinander stehender Verzahnungen;
- Fig. 4: vergrößert das Detail IV in Fig. 3;
- Fig. 5: eine der Fig. 2 entsprechende Darstellung einer Drehmomentübertragungsbaugruppe in einem Drehmomentübertragungszustand;

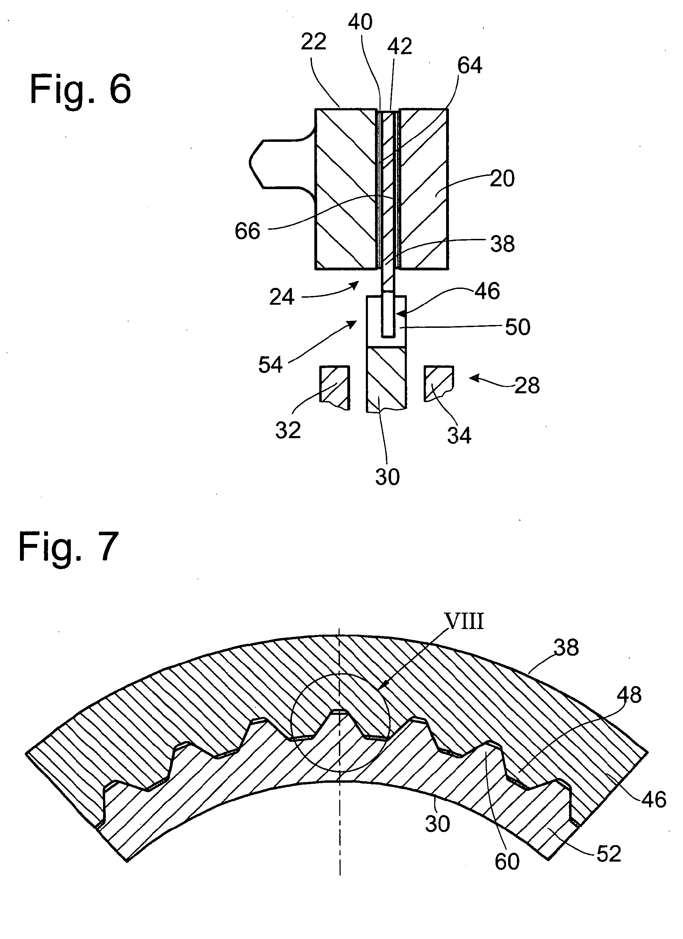

- Fig. 6: vergrößert das Detail VI in Fig. 5;
- Fig. 7: eine der Fig. 3 entsprechende Ansicht der beiden in Kämmeingriff stehenden Verzahnungen im Drehmomentübertragungszustand;
- Fig. 8: vergrößert das Detail VIII in Fig. 7;
- Fig. 9: eine der Fig. 2 entsprechende Detailansicht einer alternativen Ausgestaltungsform;
- Fig. 10: eine weitere der Fig. 2 entsprechende Ansicht einer alternativen Ausgestaltungsform;
- Fig. 11: eine weitere der Fig. 2 entsprechende Ansicht einer alternativen Ausgestaltungsform;
- Fig. 12: eine weitere der Fig. 2 entsprechende Ansicht einer alternativen Ausgestaltungsform;
- Fig. 13: eine weitere der Fig. 2 entsprechende Ansicht einer alternativen Ausgestaltungsform;
- Fig. 14: eine weitere der Fig. 2 entsprechende Ansicht einer alternativen Ausgestaltungsform;
- Fig. 15: eine weitere der Fig. 2 entsprechende Ansicht einer alternativen Ausgestaltungsform;
- Fig. 16: eine Teil-Axialansicht der in Fig. 15 dargestellten Ausgestaltungsform.

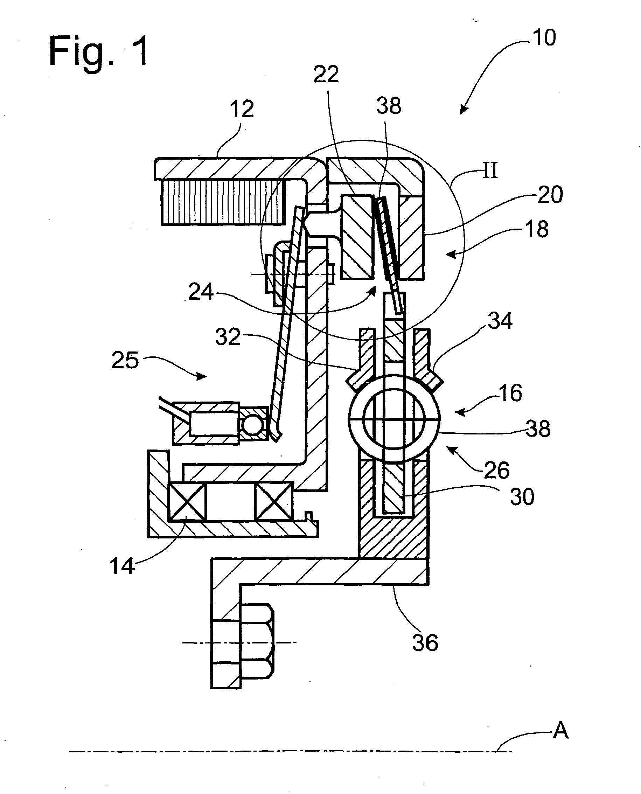

In Fig. 1 ist ein in einem Kraftfahrzeug einsetzbares Antriebssystem 10 mit einigen zum Beschreiben der Funktionalität der vorliegenden Erfindung wesentlichen Komponenten dargestellt. Dieses als Hybridmodul aufgebaute Antriebssystem 10 umfasst einen Rotor 12 einer nicht weiter dargestellten Elektromaschine. Der Rotor 12 ist über eine Lageranordnung 14 an einer feststehenden Baugruppe, beispielsweise dem Gehäuse einer Brennkraftmaschine, um eine Drehachse A drehbar gelagert. Eine nicht weiter dargestellte Antriebswelle der Brennkraftmaschine, also Kurbelwelle, ist über eine nachfolgend detailliert erläuterte Drehmomentübertragungsbaugruppe 16 bzw. eine diese Drehmomentübertragungsbaugruppe 16 umfassende Kupplung 18 mit dem Rotor 12 zur Drehmomentübertragung koppelbar oder von diesem entkoppelbar. Der Rotor 12 wiederum ist beispielsweise über eine nicht weiter dargestellte Torsionsschwingungsdämpferanordnung, wie z. B. Zweimassenschwungrad, und ggf. eine Anfahrkupplung mit einem Getriebe gekoppelt.

Die auch als Impulsstartkupplung zu bezeichnende bzw. einsetzbare Kupplung 18 umfasst eine als erstes Klemmelement wirksame, ringartig aufgebaute Widerlagerplatte 20, die mit dem Rotor 12 axial und in Umfangsrichtung fest gekoppelt ist. Diese Widerlagerplatte 20 kann beispielsweise auch Teil der Primärseite einer dann folgenden Torsionsschwingungsdämpferanordnung sein. Eine als zweite Klemmscheibe wirksame Anpressplatte 22 liegt der Widerlagerplatte 20 axial gegenüber und ist beispielsweise über Tangentialblattfedern oder dergleichen mit bzw. bezüglich dieser im Wesentlichen drehfest, jedoch axial verlagerbar gekoppelt. Ein Betätigungssystem 25 für die Kupplung 18 kann diese, je nach gewünschtem Antriebszustand, in einen Einrückzustand oder einen Ausrückzustand bringen, und zwar dadurch, dass die Anpressplatte 22 entweder in Richtung auf die Widerlagerplatte 20 zu gepresst wird, oder in Richtung von dieser, beispielsweise durch die Wirkung der Tangentialblattfedern oder dergleichen, weg bewegt wird.

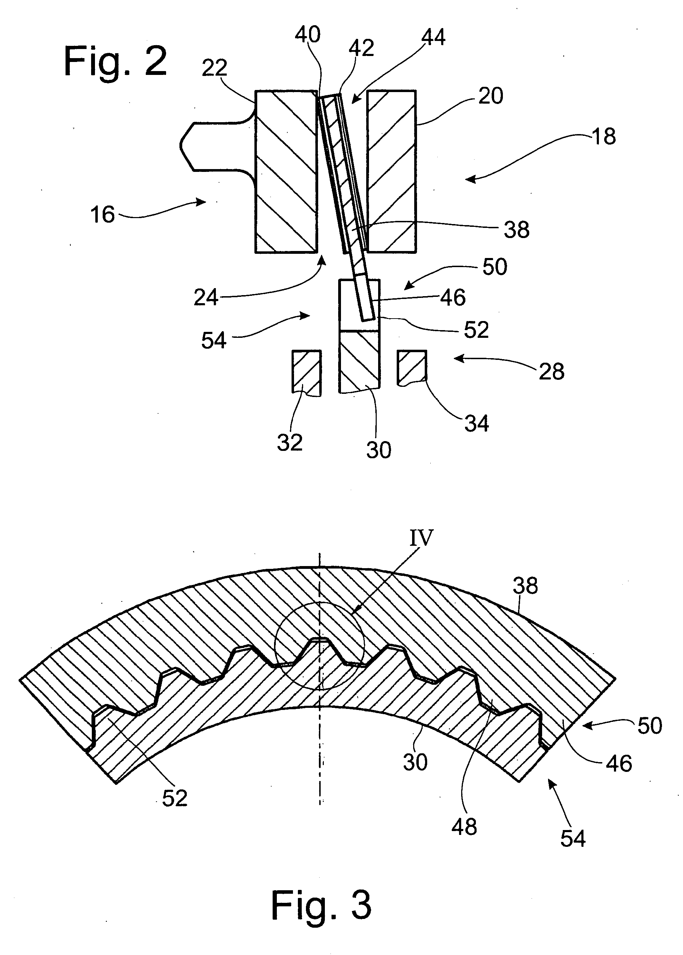

Die Drehmomentübertragungsanordnung 16, die auch in Fig. 2 in weiterem Detail erkennbar ist, umfasst eine erste, ringscheibenartige Drehmomentübertragungseinheit 24 sowie eine hier mit einer Torsionsschwingungsdämpferanordnung 26 ausgebildete zweite Drehmomentübertragungseinheit 28. Ein Zentralscheibenelement 30 dieser Torsionsschwingungsdämpferanordnung 26 bildet den Eingangsbereich bzw. die Primärseite der zweiten Drehmomentübertragungseinheit 28. Zwei Deckscheibenelemente 32, 34 nehmen über eine Dämpferfederanordnung 36 das Drehmoment vom Zentralscheibenelement 30 auf und leiten es über ein Verbindungselement 36 beispielsweise zur Kurbelwelle oder in entgegengesetzte Richtung bei Antrieb durch eine Brennkraftmaschine.

Die erste Drehmomentübertragungseinheit 24 umfasst ein beispielsweise aus Blechmaterial gebildetes, elastisch verformbares Drehmomentübertragungselement 38. Dieses trägt in seinem radial mittleren bzw. auch radial äußeren Bereich an beiden axialen Seiten jeweils einen Reibbelag 40 bzw. 42, so dass in diesem Bereich die erste Drehmomentübertragungseinheit 24 einen ersten Kopplungsbereich 44 bereitstellt. Dieser ist zwischen den beiden Klemmscheiben, also der Anpressplatte 22 und der Widerlagerplatte 20, im Drehmomentübertragungszustand klemmbar. In seinem radial inneren Bereich weist das Drehmomentübertragungselement 38 eine erste Verzahnungsformation 46 auf, die in Fig. 3 detaillierter erkennbar ist. Diese erste Verzahnungsformation 46 weist eine Mehrzahl von nach radial innen gerichteten und nach radial innen auch konvergierend, d. h. sich verjüngend ausgebildeten Zähnen 48 auf. Mit dieser Verzahnung 46 stellt das Drehmomentübertragungselement 38 einen zweiten Kopplungsbereich 50 der ersten Drehmomentübertragungseinheit 24 bereit.

Die zweite Drehmomentübertragungseinheit 28 bzw. im dargestellten Beispiel das Zentralscheibenelement 30 derselben weist im radial äußeren Bereich eine zweite Verzahnungsformation 52 auf, die einen dritten Kopplungsbereich 54 bildet. Man erkennt in Fig. 3, dass die Verzahnung 52 eine Außenverzahnung ist, also mit nach radial außen gerichteten Zähnen ausgebildet ist, die entsprechend der Verjüngung der Zähne 48 der Verzahnung 46 sich nach radial außen verjüngend ausgebildet sind. Die beiden Verzahnungen 46, 52 stehen zur Drehmomentübertragungskopplung der beiden Drehmomentübertragungseinheiten 24, 28 in Kämmeingriff, wie in Fig. 3 gezeigt.

Man erkennt in den Fig. 1 und 2 weiter, dass die erste Drehmomentübertragungseinheit 24, im Wesentlichen bedingt durch die Formgebung des Drehmomentübertragungselements 38 mit schirmartiger, also geschirmter Konfiguration ausgebildet ist. Das heißt, im nicht belasteten, entspannten Zustand ist diese Drehmomentübertragungseinheit 24 bzw. das die Reibbeläge 40, 42 tragende Drehmomentübertragungselement 38 bezüglich einer zur Drehachse A orthogonal stehenden Ebene geneigt, also schräggestellt, ausgebildet. Entsprechend sind auch die Reibbeläge 40, 42 geformt, wobei diese Reibbeläge 40, 42 durch ringartig durchlaufende Elemente oder durch einzelne in Umfangsrichtung diskret angeordnete Segmente bereitgestellt sein können. Diese Formgebung der ersten Drehmomentübertragungseinheit 24 führt allgemein dazu, dass im ausgerückten, also nicht zur Drehmomentübertragung vorgesehenen Zustand der Kupplung 18 die erste Drehmomentübertragungseinheit 24 mit ihrem ersten Kopplungsbereich 44 radial außen näher an der Anpressplatte 22 liegt und radial innen näher an der Widerlagerplatte 20 liegt.

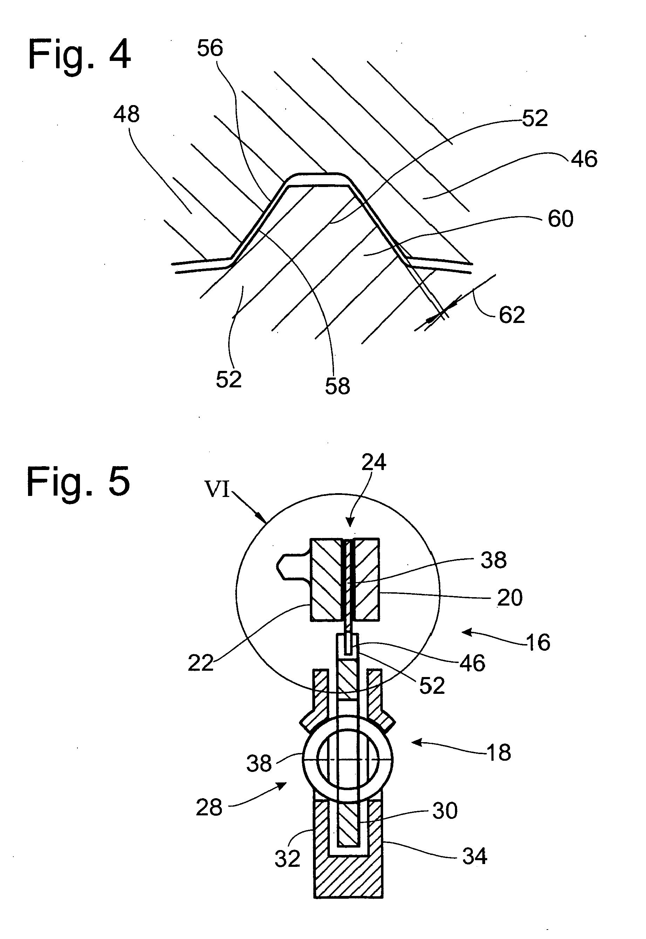

Die beiden Verzahnungen 46, 52 sind so aufeinander abgestimmt, dass zwischen den Zahnflanken 56 bzw. 58 ihrer Zähne 48, 60 in dem in Fig. 2 erkennbaren entspannten Zustand ein in Fig. 4 dargestellter Zwischenraum 62 gebildet ist. Mithin besteht also zwischen den beiden Verzahnungen 46, 52 ein Verzahnungsspiel, das sowohl geringfügige Radialbewegungen der beiden Drehmomentübertragungseinheiten 24, 28 bezüglich einander zulässt, als auch eine Axialrelatiwerlagerung. Somit können geringfügige Radialneigungen bzw. Radialversätze der Drehachsen der verschiedenen über die Drehmomentübertragungsbaugruppe 16 zu koppelnden Einheiten kompensiert werden.

Wird nun ausgehend von dem beispielsweise in Fig. 2 dargestellten Zustand die Kupplung 18 in einen Einrückzustand gebracht, soll also zwischen dem Rotor 12 und der nicht dargestellten Kurbelwelle einer Brennkraftmaschine eine Drehmomentübertragungsverbindung hergestellt werden, so dass beispielsweise ein Fahrzeug durch die Brennkraftmaschine angetrieben werden kann oder die Brennkraftmaschine gestartet werden kann, wird die Anpressplatte 22 in Richtung auf die Widerlagerplatte 20 zu bewegt. Dabei kommt die erste Drehmomentübertragungseinheit 24 mit ihrem ersten Kopplungsbereich 44 zunächst radial außen in Kontakt mit der Anpressplatte 22 und radial innen in Kontakt mit der Widerlagerplatte 20, wobei bei zunehmender Annäherung der Anpressplatte 22 an die Widerlagerplatte 20 die erste Drehmomentübertragungseinheit 24 bzw. das Drehmomentübertragungselement 38 derselben zunehmend abgeflacht wird. Auf Grund der planaren Ausgestaltung der Reiboberflächen 64 der Anpressplatte 22 bzw. 66 der Widerlagerplatte 20 ist im vollkommen eingerückten Zustand das Drehmomentübertragungselement 38 und somit die gesamte erste Drehmomentübertragungseinheit 24 ebenfalls in einem im Wesentlichen planaren Zustand. Bei diesem Übergang in den planaren Zustand findet im Bereich der ersten Verzahnungsformation 46, also im Bereich des zweiten Kopplungsbereichs 50, eine geringfügige Bewegung nach radial innen statt. Diese Bewegung nach radial innen hat zur Folge, dass die beiden Verzahnungsformationen 46, 52 einander radial angenähert werden und die Zähne 48, 60 radial tiefer ineinander eintauchen. Dabei wird das in Fig. 4 erkennbare Verzahnungsspiel 62 eliminiert und die Zahnflanken 56, 58 liegen unmittelbar gegeneinander an. Dies hat zur Folge, dass im Drehmomentübertragungszustand kein zu möglichen Klappergeräuschen oder ungewollten Relativbewegungen führendes Verzahnungsspiel zwischen den beiden Drehmomentübertragungseinheiten 24, 28 vorhanden ist, sondern diese in definierter Positionierung bezüglich einander gehalten sind. Wird die Kupplung 18 wieder in einen Ausrückzustand gebracht, so entspannt sich selbstverständlich die erste Drehmomentübertragungseinheit 24, und die beiden Verzahnungsformationen 46, 52 gelangen wieder in einen gegenseitigen Zustand, in dem das Verzahnungsspiel 62 vorhanden ist.

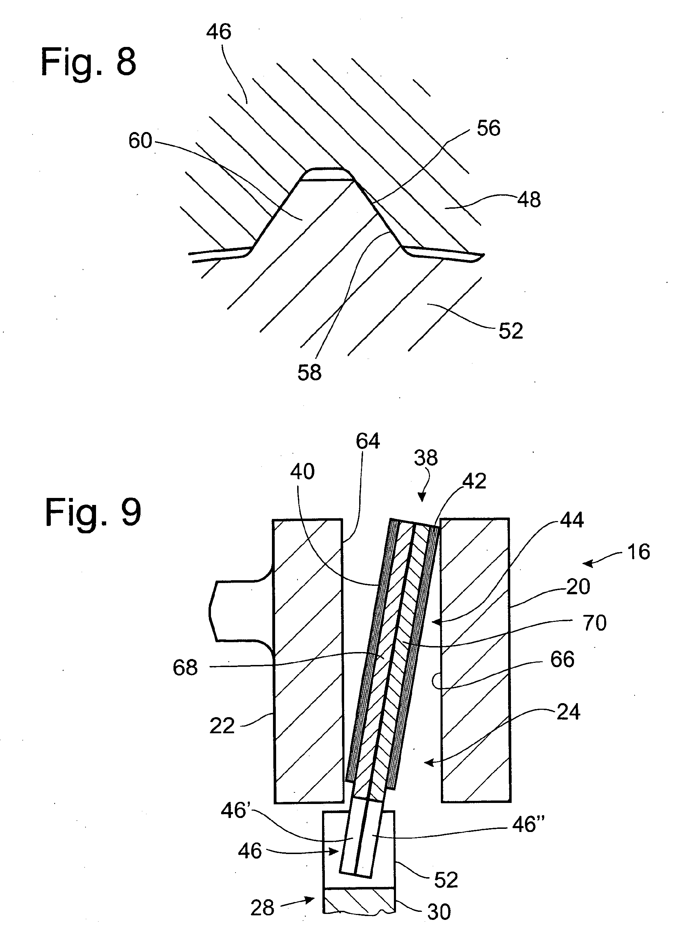

Eine abgewandelte Ausgestaltungsform einer Drehmomentübertragungsbaugruppe 10 ist in Fig. 9 gezeigt. Man erkennt hier, dass die erste Drehmomentübertragungseinheit 24 bzw. das Drehmomentübertragungselement 38 derselben mit zwei Drehmomentübertragungselemententeilen 68, 70 ausgebildet ist. Diese beiden Drehmomentübertragungselemententeile 68, 70 sind beispielsweise jeweils aus Blechmaterial aufgebaut und im entspannten Zustand mit geschirmter Konfiguration bereitgestellt, wie in Fig. 9 gezeigt. Jedes dieser Drehmomentübertragungselemententeile 68, 70 weist radial innen eine Verzahnungsformation 46' bzw. 46" auf, die beispielsweise zueinander identisch geformt bzw. dimensioniert sind und zusammen die erste Verzahnungsformation 46 bilden. Zur Bereitstellung des ersten Kopplungsbereichs 44 trägt das Drehmomentübertragungselemententeil 68 an seiner der Reibfläche 64 der Anpressplatte 22 zugewandten Seite den Reibbelag 40. Das Drehmomentübertragungselemententeil 70 trägt an seiner der Reibfläche 66 der Widerlagerplatte 20 zugewandten Seite den Reibbelag 42. Die beiden Drehmomentübertragungselemententeile 68, 70 können miteinander fest verbunden sein, beispielsweise durch Verklebung, Vernietung, Verschweißung oder dergleichen, können aber auch lose aneinander anliegen. Es kann somit eine Parallelschaltung bzw. auch eine Reihenschaltung mehrerer separater, im Wesentlichen als Tellerfeder ausgebildeter Drehmomentübertragungselemententeile generiert werden.

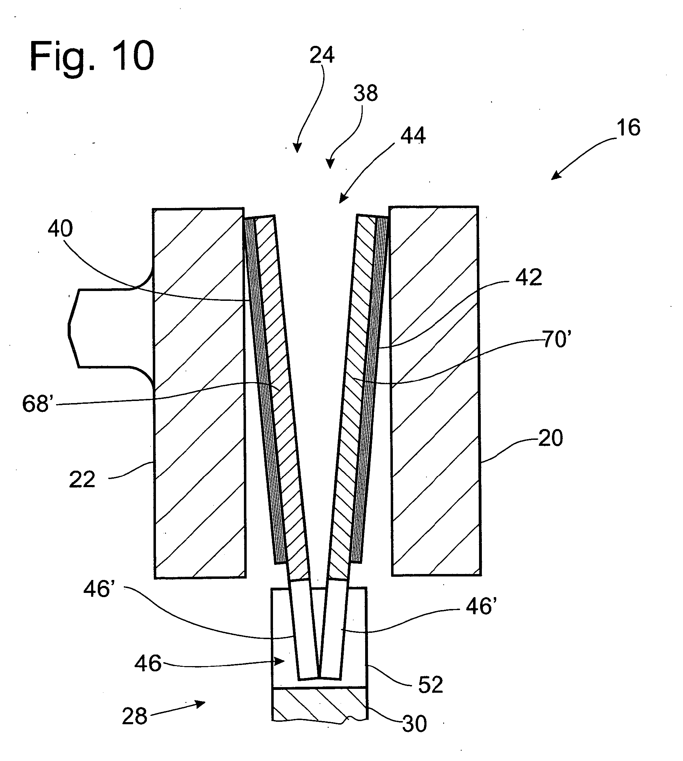

Eine weitere Abwandlung ist in Fig. 10 gezeigt. Auch hier umfasst die erste Drehmomentübertragungseinheit 24 bzw. deren Drehmomentübertragungselement 38 zwei Drehmomentübertragungselemententeile 68' bzw. 70', die jeweils den Reibbelag 40 bzw. 42 tragen. Die beiden Drehmomentübertragungselemententeile 68', 70' sind nunmehr jedoch nicht in der gleichen Richtung geschirmt, wie in Fig. 9 gezeigt, sondern sind entgegengesetzt zueinander geschirmt. Dies führt zu einer Konfiguration, bei der die beiden Reibbeläge 40, 42 des ersten Kopplungsbereichs 44 im nicht belasteten Zustand bzw. am Beginn des Einrückzustands jeweils radial außen mit der Widerlagerplatte 20 bzw. der Anspressplatte 22 in Kontakt stehen und bei zunehmendem Einrücken auch radial weiter innen in Kontakt damit treten.

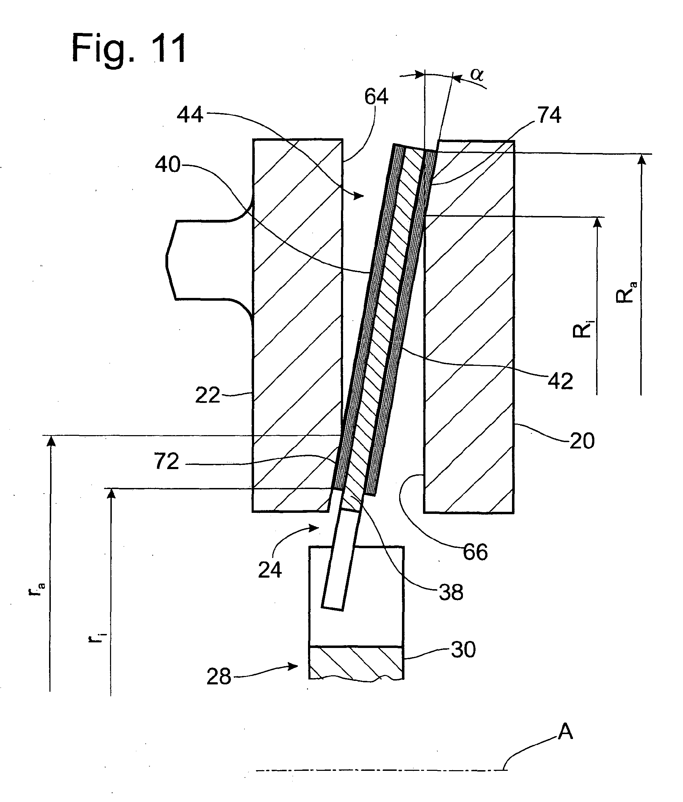

Bei allen vorangehend beschriebenen Ausgestaltungsformen besteht das Problem, dass die erste Drehmomentübertragungseinheit 24 auf Grund Ihrer Schirmung und somit ihrer Schrägstellung bezüglich der Reibflächen 64, 66 der beiden Klemmscheiben, also der Widerlagerplatte 20 und der Anpressplatte 22, zumindest am Beginn eines Einkuppelvorgangs und auch am Ende eines Auskuppelvorgangs im radial äußeren bzw. radial inneren Bereich in linien- bzw. kantenartigen Kontakt miteinander treten. Dies kann zu einer übermäßigen lokalen Belastung und dort übermäßigem Verschleiß führen. Um diesem Problem entgegenzutreten, ist bei der in Fig. 11 gezeigten Ausgestaltungsform bei der Anpressplatte 22 und der Widerlagerplatte 20 die jeweilige Reibfläche 64 bzw. 66 so ausgebildet, dass sie dort, wo sie zunächst oder verstärkt in Reibwechselwirkung mit dem ersten Kopplungsbereich 44 der ersten Drehmomentübertragungseinheit treten wird, mit einer Schräg-Ringfläche 72 bzw. 74 ausgestaltet sind. Jede dieser Ringflächen ist bezüglich einer zur Drehachse A orthogonalen Ebene, welche im Wesentlichen auch die Lage der Reibflächen 66 bzw. 64 definiert, unter einem Winkel α schräggestellt, der im Wesentlichen auch dem Schirmungswinkel des Drehmomentübertragungselements 38 und mithin der ersten Drehmomentübertragungseinheit 24 entspricht. Dies bedeutet also, dass bei der Anpressplatte 22 zwischen den beiden Radien rᵢ und rₐ eine konusartige Anschrägung zum Bereitstellen der Schräg-Ringfläche 72 gebildet ist. Bei der Widerlagerplatte 20 ist zwischen den beiden Radien Rᵢ und Rₐ eine entsprechende konusartige Anschrägung zum Bereitstellen der Schräg-Ringfläche 74 vorhanden. Die Folge davon ist, dass von Anbeginn eines Drehmomentübertragungszustands an die Reibbeläge 40, 42 in einem ein Kantenlaufen vermeidenden flächigen Reibkontakt sind. Es ist hier selbstverständlich, dass der Übergang von den Schräg-Ringflächen 72, 74 auf die verbleibenden Bereiche der jeweiligen Reibflächen 64, 66 nicht notwendigerweise, so wie in Fig. 11 dargestellt, an einer definierten Kreislinie erfolgt, sondern beispielsweise auch allmählich, also gekrümmt erfolgen kann.

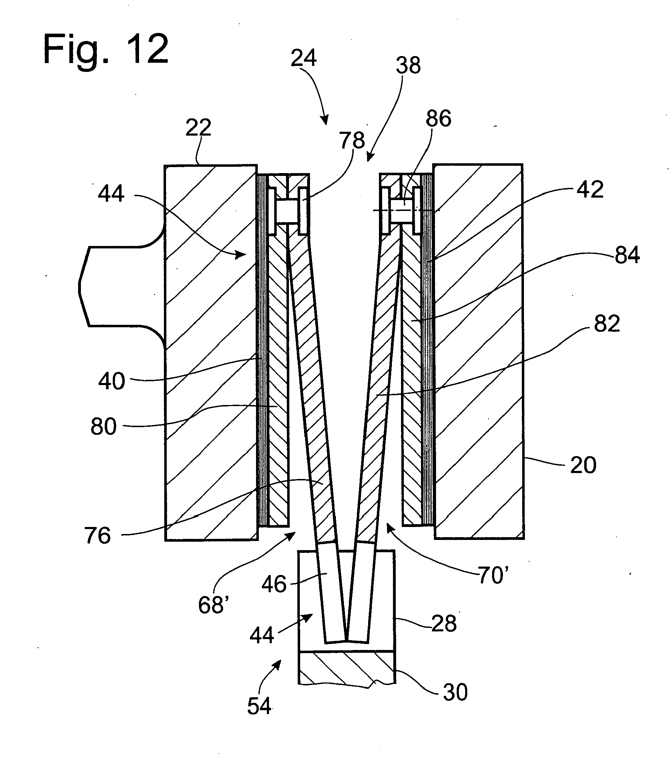

Eine weitere Möglichkeit zum Vermeiden eines übermäßig starken Kantenkontakts ist in Fig. 12 gezeigt. Auch hier weist das Drehmomentübertragungselement 38 der ersten Drehmomentübertragungseinheit 24 zwei Drehmomentübertragungselemententeile 68', 70' mit grundsätzlich entgegengesetzt gerichteter Schirmung auf. Das Drehmomentübertragungselemententeil 68 weist hierzu einen ersten ringscheibenartigen Abschnitt 76 auf, der im unbelasteten Zustand geschirmt ist und radial innen den zweiten Kopplungsbereich 50 mit der Verzahnungsformation 46 bereitstellt. Radial außen ist dieser Abschnitt durch Vernietung 78 mit einem zweiten ringscheibenartigen Abschnitt 80 verbunden, an welchem der Reibbelag 40 vorgesehen ist. Der zweite Ringscheibenabschnitt 80 stellt also mit dem Reibbelag 40 den ersten Kopplungsbereich 44 bereit. Der zweite ringscheibenartige Abschnitt 80 ist im Wesentlichen planar, also nicht geschirmt ausgebildet und erstreckt sich von seiner Verbindung mit dem ersten ringscheibenartigen Abschnitt 76 nach radial innen, also entlang eines wesentlichen Bereichs des ersten ringscheibenartigen Abschnitts 76, der geschirmt ausgebildet ist. In entsprechender Weise ist auch das andere Drehmomentübertragungselemententeil 70' mit einem geschirmten ringscheibenartigen Abschnitt 82 und einem im Wesentlichen planaren ringscheibenartigen Abschnitt 84 ausgebildet, die radial außen durch Vernietung 86 fest verbunden sind. Der planare ringscheibenartige Abschnitt 84 trägt den Reibbelag 42.

Durch diese Ausgestaltung ist dafür gesorgt, dass in jedem Zustand eine im Wesentlichen vollflächige Anlage der Reibbeläge 40, 42 an der Anpressplatte 22 bzw. der Widerlagerplatte 20 gewährleistet ist, und somit eine übermäßige Kantenbelastung nicht auftreten kann.

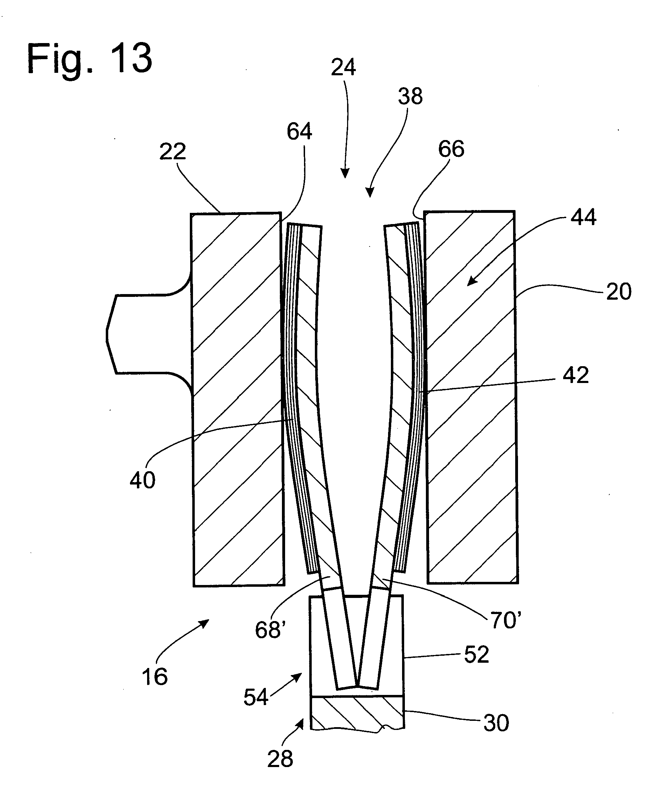

Eine weitere Ausgestaltungsform, bei welcher eine zu starke lokale, kantenartige Belastung vermieden wird, ist in Fig. 13 gezeigt. Man erkennt auch hier wieder die Drehmomentübertragungselemententeile 68', 70' des Drehmomentübertragungselements 38. Diese sind wieder im Wesentlichen in entgegengesetzter Richtung geschirmt und sind zusätzlich in denjenigen Bereichen, in welchen sie die Reibbeläge 40, 42 tragen bzw. in Reibwechselwirkung mit der Anpressplatte 22 und der Widerlagerplatte 20 treten, konkav - konkav hier bezüglich der mit diesen in Reibwechselwirkung tretenden Reibflächen 64, 66 - ausgebildet. Auf diese Art und Weise wird näherungsweise im radialen Mittenbereich des ersten Kopplungsbereichs 44 zunächst eine Reibwechselwirkung auftreten. Nähert sich die Anpressplatte 22 der Widerlagerplatte 20 an, werden die Drehmomentübertragungselemententeile 68', 70' zunehmend abgeflacht, legen sich auch in ihrem radial äußeren Bereich gegeneinander an und nehmen insbesondere auch im ersten Kopplungsbereich 44 eine näherungsweise planare Konfiguration ab. Durch diese Krümmung der Drehmomentübertagungselemententeile 68', 70' kann auf Grund der vorhandenen Axialelastizität derselben dann, wenn sie in ihren radialen äußeren Bereichen auch gegeneinander anliegen, eine Federungsfunktion in die Drehmomentübertragungsanordnung 16 integriert werden, die näherungsweise derjenigen einer Belagsfederung entspricht. Dies kann für die Erzeugung eines sanften Momentenanstiegs beim Einrücken genutzt werden, was in ähnlicher Weise auch für die anderen Ausgestaltungsvarianten zutrifft.

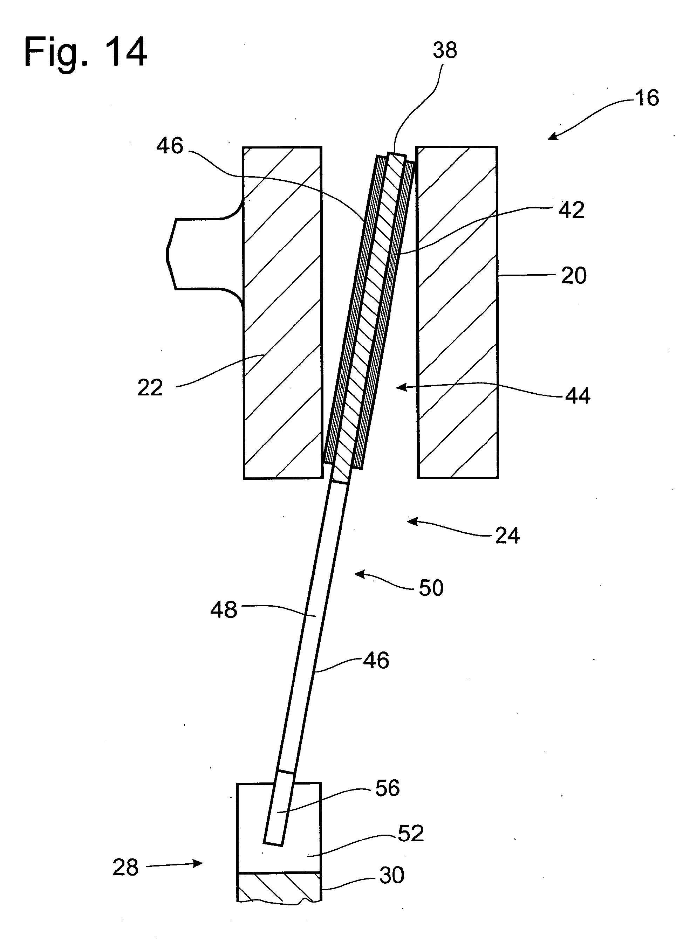

Eine im Wesentlichen der mit Bezug auf die Fig. 2 beschriebenen Ausgestaltungsform entsprechende Variante ist in Fig. 14 dargestellt. Man erkennt hier jedoch, dass die radiale Erstreckungslänge des zweitens Kopplungsbereichs 50, also der Verzahnung 46, deutlich länger ist und näherungsweise der radialen Erstreckungslänge des ersten Kopplungsbereichs 44 entspricht. Auf diese Art und Weise wird eine bei der Abflachung der ersten Drehmomentübertragungseinheit 24 generierte Verlagerung der Verzahnung 46 nach radial innen verstärkt. Gleichzeitig wird es möglich, durch die deutlich längere Ausgestaltung der Zähne 48 der Verzahnung 46 eine radiale Elastizität bereitzustellen, welche Fertigungstoleranzen kompensieren kann. Mit einer derartigen Ausgestaltung wird es insbesondere möglich, auch bei nur geringer Schirmung des Drehmomentübertragungselements 38 ein vergleichsweise großes Verzahnungsspiel zu beseitigen.

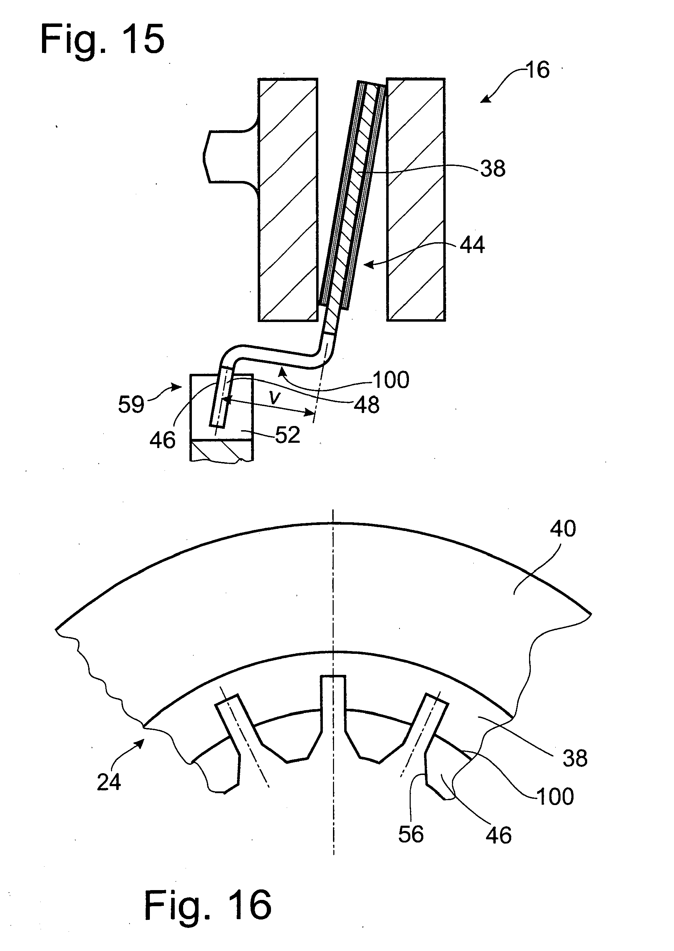

Eine weitere Ausgestaltungsform ist in den Fig. 15 und 16 gezeigt. Man erkennt in Fig. 15, dass der zweite Kopplungsbereich 50, also die Verzahnung 46, bezüglich des ersten Kopplungsbereichs 44 versetzt liegt. Insbesondere kann die Ausgestaltung derart sein, dass die Zähne 48 der Verzahnung 46 zum Bereitstellen eines Verbindungsbereichs 100 verlängert und zweifach näherungsweise rechtwinklig abgebogen sind, so dass der Verbindungsbereich 100 näherungsweise senkrecht zu der Verzahnung 46 bzw. den in Eingriff mit der Verzahnung 52 tretenden Bereichen derselben und auch zu dem ringscheibenartig ausgebildeten Bereich des Drehmomentübertragungselements 38 steht. Durch diese zweifache Abkröpfung wird mit dem Versatz V eine hebelartige Übersetzung der Verlagerung der Verzahnung 46 nach radial innen generiert. Gleichzeitig wird durch das zweifache Abkröpfen des Verlängerungsbereichs 100 bzw. der noch weiter fortgesetzten Zähne 48 eine radiale Elastizität ermöglicht, die wiederum den Ausgleich von Fertigungstoleranzen ermöglicht.

## Patentansprüche

1. Drehmomentübertragungsbaugruppe, insbesondere für den Antriebsstrang eines Fahrzeugs, umfassend:
- eine erste Drehmomentübertragungseinheit (24), die zur Drehmomentübertragung in einem ersten Kopplungsbereich (44) zwischen zwei scheibenartigen und aufeinander zu bewegbaren Klemmelementen (20, 22) klemmbar ist und in einem zweiten Kopplungsbereich (50) eine erste Verzahnungsformation (46) aufweist,
- eine zweite Drehmomentübertragungseinheit (28), die in einem dritten Kopplungsbereich (54) eine zweite Verzahnungsformation (52) aufweist, welche mit der ersten Verzahnungsformation (46) der ersten Drehmomentübertragungseinheit (24) in Kämmeingriff steht,
wobei ein die erste Verzahnungsformation (46) aufweisendes Drehmomentübertragungselement (38) der ersten Drehmomentübertragungseinheit (24) mit schirmartiger Konfiguration und elastisch verformbar ausgebildet ist, derart, dass bei zur Drehmomentübertragung geklemmtem ersten Kopplungsbereich (44) das Drehmomentübertragungselement (38) eine im Wesentlichen planare, nicht geschirmte oder geringer geschirmte Konfiguration aufweist, und wobei die erste Verzahnungsformation (46) und die zweite Verzahnungsformation (52) derart aufeinander abgestimmt sind, dass bei dem nicht geklemmten Zustand entsprechender schirmartiger Konfiguration des Drehmomentübertragungselements (38) ein Verzahnungsspiel (62) zwischen der ersten Verzahnungsformation (46) und der zweiten Verzahnungsformation (52) vorhanden ist, und dass bei dem geklemmten Zustand entsprechender planarer oder geringer geschirmter Konfiguration im Wesentlichen kein Verzahnungsspiel zwischen diesen vorhanden ist.

2. Drehmomentübertragungsbaugruppe nach Anspruch 1,
**dadurch gekennzeichnet, dass** die erste Verzahnungsformation (46) eine Innenverzahnung ist.

3. Drehmomentübertragungsbaugruppe nach Anspruch 2,
**dadurch gekennzeichnet, dass** die erste Verzahnungsformation (46) nach radial innen konvergierende Zähne (48) aufweist.

4. Drehmomentübertragungsbaugruppe nach einem der Ansprüche 1 bis 3,
**dadurch gekennzeichnet, dass** das Drehmomentübertragungselement (38) kreisringartig ausgebildet ist.

5. Drehmomentübertragungsbaugruppe nach einem der Ansprüche 1 bis 4,
**dadurch gekennzeichnet, dass** das Drehmomentübertragungselement (38) aus Blechmaterial aufgebaut ist.

6. Drehmomentübertragungsbaugruppe nach einem der Ansprüche 1 bis 5,
**dadurch gekennzeichnet, dass** das Drehmomentübertragungselement (38) eine Mehrzahl von Drehmomentübertragungselemententeilen (68, 70; 68', 70') aufweist, welche zusammen den zweiten Kopplungsbereich (50) bilden.

7. Drehmomentübertragungsbaugruppe nach Anspruch 7,
**dadurch gekennzeichnet, dass** wenigstens zwei Drehmomentübertragungselemententeile (68, 70) in der gleichen Richtung geschirmt sind.

8. Drehmomentübertragungsbaugruppe nach Anspruch 6 oder 7,
**dadurch gekennzeichnet, dass** wenigstens zwei Drehmomentübertragungselemententeile (68', 70') in entgegengesetzter Richtung geschirmt sind.

9. Drehmomentübertragungsbaugruppe nach Anspruch 8,
**dadurch gekennzeichnet, dass** die Drehmomentübertragungselemententeile (68', 70') jeweils einen ersten ringscheibenartigen Abschnitt (76, 82) aufweisen, wobei die ersten ringscheibenartigen Abschnitte (76, 82) den zweiten Kopplungsbereich (50) bereitstellen, und jeweils einen mit einem ersten ringscheibenartigen Abschnitt (76, 80) fest verbundenen, im Wesentlichen nicht geschirmten zweiten ringscheibenartigen Abschnitt (80, 84) aufweisen, wobei die zweiten ringscheibenartigen Abschnitte (80, 84) den ersten Kopplungsbereich (44) bereitstellen.

10. Drehmomentübertragungsbaugruppe nach Anspruch 8,
**dadurch gekennzeichnet, dass** wenigstens ein Drehmomentübertragungselemententeil (68', 70') in einem den ersten Kopplungsbereich (44) bereitstellenden Bereich gekrümmt ausgebildet ist.

11. Drehmomentübertragungsbaugruppe nach einem der Ansprüche 1 bis 10,
**dadurch gekennzeichnet, dass** die erste Drehmomentübertragungseinheit (24) in ihrem ersten Kopplungsbereich (44) Reibbeläge (40, 42) aufweist.

12. Drehmomentübertragungsbaugruppe nach einem der Ansprüche 1 bis 10,
**dadurch gekennzeichnet, dass** die zweite Drehmomentübertragungseinheit (28) eine Torsionsschwingungsdämpferanordnung (18) umfasst.

13. Drehmomentübertragungsbaugruppe nach einem der Ansprüche 1 bis 10,
**dadurch gekennzeichnet, dass** der erste Kopplungsbereich (44) der ersten Drehmomentübertragungseinheit und der zweite Kopplungsbereich (50) der ersten Drehmomentübertragungseinheit näherungsweise die gleiche Radialerstreckungslänge aufweisen.

14. Drehmomentübertragungsbaugruppe nach einem der Ansprüche 1 bis 13,
**dadurch gekennzeichnet, dass** der erste Kopplungsbereich (44) der ersten Drehmomentübertragungseinheit (24) und der zweite Kopplungsbereich (50) der ersten Drehmomentübertragungseinheit bezüglich einander versetzt liegen.

15. Drehmomentübertragungsbaugruppe nach Anspruch 14,
**dadurch gekennzeichnet, dass** der erste Kopplungsbereich (44) und der zweite Kopplungsbereich (50) durch einen zu diesen beiden Kopplungsbereichen näherungsweise senkrecht stehenden Verbindungsbereich miteinander verbunden sind.

16. Kupplungsanordnung, umfassend eine Drehmomentübertragungsbaugruppe (16) nach einem der vorhergehenden Ansprüche und beidseits des ersten Kopplungsbereichs (44) derselben jeweils eine Klemmscheibe (20, 22), wobei zum Herstellen eines Drehmomentübertragungszustands die Klemmscheiben (20, 22) in Richtung aufeinander zu pressbar sind.

17. Kupplungsanordnung nach Anspruch 16,
**dadurch gekennzeichnet, dass** wenigstens eine der Klemmscheiben (20, 22) in demjenigen in Klemmwechselwirkung mit dem ersten Kopplungsbereich (44) tretenden Radialbereich von radial äußerem Bereich und radial innerem Bereich, welchem die erste Drehmomentübertragungseinheit (24) im nicht geklemmten Zustand näher liegt, eine an die Schirmung angepasste Schräg-Ringfläche (72, 74) aufweist.

18. Kupplungsanordnung nach Anspruch 16,
**dadurch gekennzeichnet, dass** ein Schrägstellungswinkel (α) der Schräg-Ringfläche (72, 74) im Wesentlichen einem Schirmungswinkel der ersten Drehmomentübertragungseinheit (24) entspricht.
